Europäisches Patentamt

European Patent Office

Office européen des brevets

(19)

(11) Veröffentlichungsnummer : **0 105 072**
**B1**

(12) ## EUROPÄISCHE PATENTSCHRIFT

(45) Veröffentlichungstag der Patentschrift :
06.05.87

(21) Anmeldenummer : 82710046.2

(22) Anmeldetag : 06.10.82

(51) Int. Cl.⁴ : **H 04 N   9/64**

(54) **Integrierte Schaltung eines Digitalfilters für den Chrominanzkanal von Farbfernsehgeräten.**

(43) Veröffentlichungstag der Anmeldung :
**11.04.84 Patentblatt 84/15**

(45) Bekanntmachung des Hinweises auf die Patenterteilung : **06.05.87 Patentblatt 87/19**

(84) Benannte Vertragsstaaten :
**DE FR GB IT NL**

(56) Entgegenhaltungen :
**NACHRICHTENTECHNISCHE ZEITSCHRIFT N.T.Z., Band 35, Nr. 8, August 1982, Seiten 524-529, Berlin, DE. M. JACOBSEN et al.: "Digitaler PAL-Decoder für Farbfernsehempfänger"
ELECTRONICS INTERNATIONAL, Band 54, Nr. 16, August 1981, Seiten 97-103, New York, USA, T. FISCHER: "Digital VLSI breeds nest-generation TV receivers"**

(73) Patentinhaber : **Deutsche ITT Industries GmbH
Hans-Bunte-Strasse 19 Postfach 840
D-7800 Freiburg (DE)
DE
ITT INDUSTRIES INC.
320 Park Avenue
New York, NY 10022 (US)
FR GB IT NL**

(72) Erfinder : **Baker, Peotr H.
Fishpond House Park Road
Allington Lincolnshire (GB)**

(74) Vertreter : **Stutzer, Gerhard, Dr.
Deutsche ITT Industries GmbH Patent- und Lizenzabteilung Hans-Bunte-Strasse 19 Postfach 840
D-7800 Freiburg (DE)**

EP 0 105 072 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine integrierte Schaltung eines Digitalfilters, das im digital arbeitenden Chrominanzkanal von Farbfernsehgeräten angeordnet ist und das Addierer, Konstanten-Multiplizierer und Verzögerungsglieder enthält, deren Verzögerungszeit gleich einem Viertel der Periodendauer der Referenzträgerfrequenz fc ist, vgl. den Oberbegriff des Anspruchs 1.

Aus der deutschen Offenlegungsschrift DE-A1-28 54 236 sind derartige Farbfernsehgeräte bekannt. Dabei wird das Farb-Bild-Austast-Synchronsignal-Gemisch (FBAS-Signal) vollständig mit Mitteln der Digitaltechnik aufbereitet, und zwar wird signalflußmäßig hinter den Zwischenfrequenzstufen und dem Videodemodulator von der analogen auf die digitale Signalaufbereitung übergegangen, d. h. dort ist ein Analog-Digital-Wandler angeordnet.

Aus « Fernseh- und Kinotechnik », 1981, Seiten 317 bis 323 und 371 bis 379 sowie einer Zusammenfassung dieses Aufsatzes in « NTZ », 1982, Heft 8, Seiten 524 bis 529 ist sowohl die allgemeine Form (loc. cit. Seite 525, Bild 2) als auch der spezielle Aufbau (loc. cit. Seite 320, Bild 7) eines Digitalfilters für den Chrominanzkanal bekannt, durch das die vom Durchlaßbereich der Zwischenfrequenzstufen bewirkte Amplitudenabsenkung des Referenzträgers fc (auch als Farbhilfsträger bezeichnet) mittels seines gegenläufig zum Frequenzgang des Chrominanzverstärkers dimensionierten Frequenzgangs wieder ausgeglichen wird, so daß sich für das Chrominanzsignal insgesamt eine beidseits der Referenzträgerfrequenz möglichst flache und symmetrisch verlaufende Durchlaßcharakteristik ergibt, deren Bandbreite z. B. beim PAL-System 1,4 MHz beträgt.

Das bekannte Digitalfilter ist ein aus drei Filterabschnitten bestehendes, umschaltbares Chrominanz-filter, deren Transferfunktionen lauten :

$$T_1(z) = -1/2 + z^{-2} - 1/2\, z^{-4}$$

$$T_2(z) = +1/2 + z^{-4} + 1/2\, z^{-8}$$

$$T_3(z) = 1 + z^{-8},$$

wobei z die Variable der z-Ebene und gleich exp $-\pi$ jf/2fc ist. Zum ersten Abschnitt $T_1$ kann der zweite Abschnitt $T_2$ und zu diesem der dritte Abschnitt $T_3$ in Serie geschaltet werden. Im theoretisch einfachsten Fall ist also der Abschnitt $T_1$ wirksam, so daß das Digitalfilter entsprechend loc. cit, Seite 525, Bild 2 aus vier Verzögerungsgliedern, drei Addieren und zwei Konstanten-Multiplizierern besteht.

Nun schlägt daher aber loc. cit, Seite 320, rechte Spalte die Serienschaltung aus erstem und zweitem Abschnitt als Standard-Chrominanzkanal-Digitalfilter vor. Abschnitt $T_2$ ist aber durch acht Verzögerungsglieder, fünf Addierer und fünf Konstanten-Multiplizierer zu realisieren, so daß insgesamt 25 Teilschaltungen erforderlich sind.

Dies bedeutet jedoch einen erheblichen Kristallflächenaufwand bei der halbleitertechnischen Integrierung.

Die Aufgabe der in den Ansprüchen gekennzeichneten Erfindung besteht daher darin, für Farbfernsehempfänger mit digitaler Signalaufbereitung nach der genannten Offenlegungsschrift eine integrierte Schaltung für ein entsprechendes Digitalfilter anzugeben, das die durch die Zwischenfrequenzstufen bewirkte Amplitudenabsenkung des Referenzträgers im Verlauf der digitalen Signalaufbereitung auszugleichen gestattet, jedoch wesentlich einfacher als das bekannte Digitalfilter aufgebaut ist, und das dessen Eigenschaft, daß die Steigung der Frequenzcharakteristik des Digitalfilters bei konstanter Mittenfrequenz-Verstärkung und bei konstanter Gruppenlaufzeit veränderbar ist und es einen linearen Verlauf der Phasenverschiebung hat, ebenfalls aufweist.

Die Erfindung, ihre Vorteile und Ausführungsbeispiele werden nun anhand der Figuren der Zeichnung näher erläutert.

Figur 1   zeigt schematisch das Blockschaltbild des Chrominanzkanals eines Farbfernsehgeräts unter Verwendung eines Digitalfilters nach der Erfindung,

Figur 2   zeigt schematisch die Schwankungsbreite der Durchlaßkurve der ZF-Stufen eines Farbfernsehgeräts,

Figur 3   zeigt das Blockschaltbild eines ersten Ausführungsbeispiels der Erfindung,

Figur 4   zeigt das Blockschaltbild eines zweiten Ausführungsbeispiels der Erfindung und

Figur 5   zeigt die Frequenzcharakteristik des Digitalfilters nach der Erfindung im Bereich der Referenzträgerfrequenz des SECAM-Farbfernsehsystems.

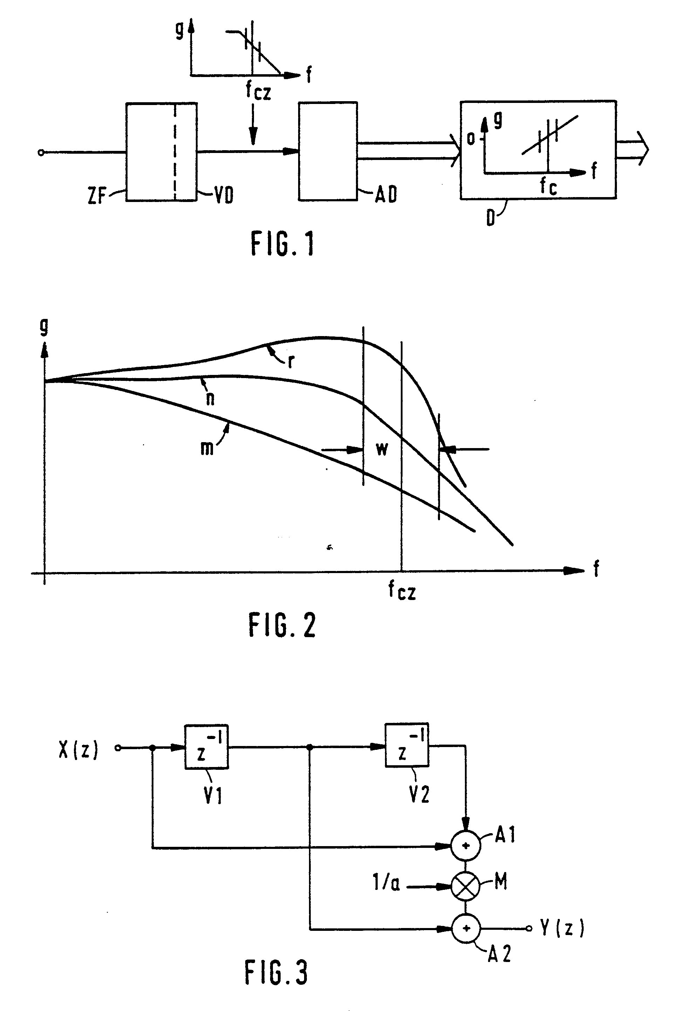

Die Fig. 1 zeigt stark schematisiert die für die Erfindung wesentlichen Teile des Chrominanzkanals eines Farbfernsehempfängers mit digitaler Signalaufbereitung. Die Zwischenfrequenzstufen ZF haben den oben in Fig. 1 gezeigten Frequenzgang im Bereich der der Referenzträgerfrequenz entsprechenden Frequenz fcz wobei mit g der Gewinn bzw. die Verstärkung der Zwischenfrequenzstufen ZF und mit f die Frequenz bezeichnet ist. Die Steilheit des abfallenden Teils beträgt dabei üblicherweise 6 dB pro Oktave.

Das Ausgangssignal des hinter den Zwischenfrequenzstufen ZF angeordneten Videodemodulators VD ist dem Eingang des Analog-Digital-Wandlers AD zugeführt und dessen Ausgangssignal dem Eingang des Digitalfilters D, das entsprechend der Erfindung der Frequenzgangkompensation des Chrominanzkanals dient.

Fig. 2 zeigt im Vergleich zu Fig. 1 vergrößert den möglichen Verlauf der Durchlaßkurve der Zwischenfrequenzstufen ZF. Dabei ist die mit n bezeichnete Kurve die an sich gewünschte, also die Nominalkurve, während die Kurven m, r die Grenzkurven des fertigungsbedingten Schwankungsbereichs des Frequenzgangs sind. Symmetrisch zur Frequenz fcz liegt das Frequenzband des Chrominanzsignals, dessen Breite mit w bezeichnet ist. Aus Fig. 2 ergibt sich die Forderung an den Farbfernsehgerät-Hersteller, die fertigungsbedingten Schwankungen des Frequenzgangs der Zwischenfrequenzstufen durch eine Beeinflussungsmöglichkeit des Frequenzgangs des kompensierenden Filters auszugleichen.

Diese Möglichkeit schafft die Erfindung dadurch, daß die Transferfunktion T(z) des Digitalfilters folgende Gleichung erfüllt:

$$Y(z)/X(z) = T(z) = 1/a + z^{-1} + z^{-2}/a$$

Dabei ist mit a eine im Betrieb des Digitalfilters konstante Zahl bezeichnet, die jedoch bei der Herstellung des Farbfernsehgeräts eingestellt, also abgeglichen werden kann.

Die Fig. 3 zeigt in Form eines üblichen Digitalfilter-Blockschaltbildes ein erstes Ausführungsbeispiel für die integrierte Schaltung des Digitalfilters. Das Eingangssignal X(z) liegt am Eingang des ersten Verzögerungsglieds V1 und am ersten Eingang des ersten Addierers A1, während der Ausgang des ersten Verzögerungsglieds V1 am ersten Eingang des zweiten Addierers A2 angeschlossen ist. Dessen Ausgang ist der Ausgang des Digitalfilters. Der Ausgang des ersten Verzögerungsglieds V1 liegt ferner am Eingang des zweiten Verzögerungsglieds V2, dessen Ausgang mit dem zweiten Eingang des ersten Addierers A1 verbunden ist, wobei dessen Ausgang wiederum am ersten Eingang des Konstanten-Multiplizierers M liegt, dessen zweitem Eingang ein die Zahl 1/a repräsentierendes Signal zugeführt ist.

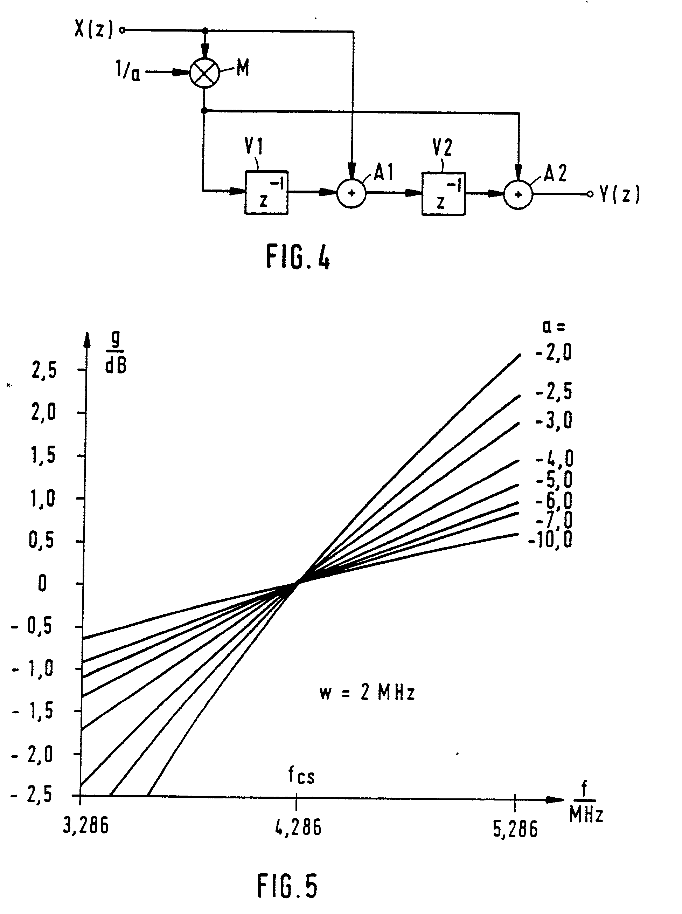

Die Fig. 4 zeigt ein zweites Ausführungsbeispiel der Erfindung, ebenfalls in Form eines Digitalfilter-Blockschaltbilds. Das Eingangssignal X(z) liegt am ersten Eingang des Multiplizierers M, dessen zweitem Eingang ein die Zahl 1/a repräsentierendes Signal zugeführt ist, und am ersten Eingang des ersten Addierers A1. Der Ausgang des Konstanten-Multiplizierers M liegt am Eingang des ersten Verzögerungsglieds V1, dessen Ausgang mit dem zweiten Eingang des ersten Addierers A1 verbunden ist, und am ersten Eingang des zweiten Addierers A2, dessen Ausgang der des Digitalfilters ist und somit das Ausgangssignal Y(z) führt. Der Ausgang der ersten Addierers A1 liegt am Eingang des zweiten Verzögerungsglieds V2, dessen Ausgang mit dem zweiten Eingang des zweiten Addierers A2 verbunden ist.

In den Fig. 3 und 4 ist die Verzögerungszeit der Verzögerungsglieder V1, V2 jeweils gleich der Periodendauer der vierfachen Referenzträgerfrequenz 4fc des Farbfernsehgeräts.

In Fig. 5 ist der Frequenzgang eines Digitalfilters nach der Erfindung für einen SECAM-Farbfernsehempfänger gezeigt, bei dem die Referenzträgerfrequenz fcs = 4,286 MHz beträgt. Fig 5 zeigt acht Kurven unterschliedlicher Steilheit für die rechts oben angegebenen Zahlenwerte von a, wobei die Bandbreite w = 2 MHz beträgt.

Es ist selbstverständlich, daß auch für PAL- bzw. NTSC-Farbfernsehgeräte entsprechende Digitalfilter-Durchlaßkurven, bezogen auf die jeweilige Referenzträgerfrequenz, realisierbar sind.

Aufgrund der hohen zu verarbeitenden Frequenzen ist es zweckmäßig, die verwendeten Addierer, Multiplizierer und Verzögerungsglieder für die Parallelverarbeitung mehrstelliger Datensignale zu konzipieren.

Durch die Erfindung läßt sich auf elektrisch einfachere Weise, als dies bei Farbfernsehgeräten mit durchgehend analoger Signalverarbeitung möglich ist, die Frequenzgangkompensation des Chrominanzkanals realisieren, wobei insbesondere die einfache Möglichkeit der geschilderten Anpassung an Fertigungsschwankungen von Vorteil ist.

**Patentansprüche**

1. Integrierte Schaltung eines Digitalfilters (D), das im digital arbeitenden Chrominanzkanal von Farbfernsehgeräten angeordnet ist und das Addierer, Konstanten-Multiplizierer und Verzögerungsglieder enthält, deren Verzögerungszeit gleich einem Viertel der Periodendauer der Referenzträgerfrequenz (fc) ist, wobei die vierfache Referenzträgerfrequenz (4fc) die Frequenz des Taktsignals des Digitalfilters (D) ist, gekennzeichnet durch folgende Merkmale:

das Digitalfilter (D) hat die Transferfunktion

$$Y(z)/X(z) = T(z) = 1/a + z^{-1} + z^{-2}/a,$$

wobei mit a eine vom Hersteller des Farbfernsehgeräts vorgebbare, in dessen Betrieb jedoch konstante Zahl und z die Variable der z-Ebene ist, und

besteht lediglich aus einem einzigen Konstanten-Multiplizierer (m), sowie aus einem jeweils ersten bzw. zweiten Addierer (A1, A2) bzw. Verzögerungsglied (V1, V2),

die entweder derart untereinander verknüpft sind, daß

der Eingang des Digitalfilters (D) am Eingang des ersten Verzögerungsglieds (V1) und am ersten Eingang des ersten Addierers (A1) liegt,

der Ausgang des ersten Verzögerungsglieds (V1) am ersten Eingang des zweiten Addierers (A2), dessen Ausgang der des Digitalfilters (D) ist, und am Eingang des zweiten Verzögerungsglieds (V2), dessen Ausgang am zweiten Eingang des ersten Addierers (A1) liegt, angeschlossen ist und

der Ausgang des ersten Addierers (A1) am ersten Eingang des Konstanten-Multiplizierers (M) liegt, an dessen zweitem Eingang die Zahl a liegt und dessen Ausgang mit dem zweiten Eingang des zweiten Addierers (A2) verbunden ist,

oder die derart untereinander verknüpft sind, daß

der Eingang des Digitalfilters (D) am ersten Eingang des Konstanten-Multiplizierers (M), an dessen zweitem Eingang die Zahl a liegt, und am ersten Eingang des ersten Addierers (AD1) liegt,

der Ausgang des Konstanten-Multiplizierers (M) am Eingang des ersten Verzögerungsglieds (V1), dessen Ausgang mit dem zweiten Eingang des ersten Addierers (A1) verbunden ist, und am ersten Eingang des zweiten Addierers (A2) liegt, dessen Ausgang der des Digitalfilters (D) ist, und

der Ausgang des ersten Addierers (A1) am Eingang des zweiten Verzögerungsglieds (V2), dessen Ausgang mit dem zweiten Eingang des zweiten Addierers (A2) verbunden ist, liegt,

2. Integrierte Schaltung nach Anspruch 1 oder 2, dadurch gekennzeichnet, daß die Zahl a zwischen — 2 und — 10 liegt.

3. Integrierte Schaltung nach Anspruch 1 oder 2, dadurch gekennzeichnet, daß Addierer (A1, A2), Konstanten-Multiplizierer (M) und Verzögerungsglieder (V1, V2) mehrstellige Daten parallel verarbeiten.

## Claims

1. Integrated circuit of a digital filter (D) forming part of the digital chrominance channel of a color-television set and containing adders, constant multipliers, and delay elements each providing a delay equal to one fourth of the period of the frequency (fc) of the chrominance-subcarrier reference, four times the frequency (4fc) of the chrominance-subcarrier reference being the frequency of the clock signal of the digital filter (D), characterized by the following features :

The digital filter (D) has the transfer function

$$Y(z)/X(z) = T(z) = 1/a + z^{-1} + z^{-2}/a,$$

where a is a number presettable by the manufacturer of the color-television set but constant in operation, and z is the variable of the z-plane, and

consists of only a single constant multiplier (m), a first adder (A1), a second adder (A2), a first delay element (V1), and a second delay element (V2)

which either are interconnected in such a way

that the input of the digital filter (D) is connected to the input of the first delay element (V1) and to the first input of the first adder (A1),

that the output of the first delay element (V1) is coupled to the first input of the second adder (A2), whose output is the output of the digital filter (D), and to the input of the second delay element (V2), whose output is coupled to the second input of the first adder (A1), and

that the output of the first adder (A1) is coupled to the first input of the constant multiplier (M), whose second input is fed with the number a, and whose output is connected to the second input of the second adder (A2),

or are interconnected in such a way

that the input of the digital filter (D) is connected to the first input of the constant multiplier (M), whose second input is fed with the number a, and to the first input of the first adder (A1),

that the output of the constant multiplier (M) is coupled to the input of the first delay element (V1), which has its output connected to the second input of the first adder (A1), and to the first input of the second adder (A2), whose output is the output of the digital filter (D), and

that the output of the first adder (A1) is coupled to the input of the second delay element (V2), which has its output connected to the second input of the second adder (A2).

2. An integrated circuit as claimed in claim 1, characterized in that the number a lies between — 2 and — 10.

3. An integrated circuit as claimed in claim 1 or 2, characterized in that the adders (A1, A2), the constant multiplier (M), and the delay elements (V1, V2) process multibit data in parallel.

## Revendications

1. Circuit intégré d'un filtre numérique (D) inclus dans le canal de chrominance numérique d'un poste de télévision couleurs et comportant des additionneurs, un multiplicateur par une constante et des

**0 105 072**

circuits de retard dont le temps de retard est égal à un quart de la période de la fréquence de la sous-porteuse de chrominance (fc), la fréquence d'horloge du filtre numérique (D) étant égale à quatre fois (4fc) la fréquence de la sous-porteuse de chrominance, caractérisé en ce que :

le filtre numérique possède la fonction de transfert suivante :

$$Y(z)/X(z) = T(z) = 1/a + z^{-1} + z^{-2}/a,$$

dans laquelle a est une valeur ajustable par le fabricant de postes de télévision couleurs, mais restant constante dans le fonctionnement de chaque poste, alors que z est la variable dans le plan z, et

il se compose uniquement d'un seul multiplicateur par une constante (M), ainsi que d'un premier et un deuxième additionneur (A1, A2) et d'un premier et un deuxième circuit de retard (V1, V2),

lesquels sont associés, soit de telle manière que :

l'entrée du filtre numérique (D) est connectée à l'entrée du premier circuit de retard (V1) et à la première entrée du premier additionneur (A1),

la sortie du premier circuit de retard (V1) est connectée à la première entrée du deuxième additionneur (A2) dont la sortie est celle du filtre numérique (D) et à l'entrée du deuxième circuit de retard (V2) dont la sortie est couplée à la deuxième entrée du premier additionneur (A1), et

la sortie du premier additionneur (A1) est connectée à la première entrée du multiplicateur par une constante (M), à la deuxième entrée duquel est appliqué le nombre a et dont la sortie est connectée à la deuxième entrée du deuxième additionneur (A2),

soit de telle manière que :

l'entrée du filtre numérique (D) est connectée à la première entrée du multiplicateur par une constante (M), à la deuxième entrée duquel est appliqué le nombre a, et à la première entrée du premier additionneur (A1),

la sortie du multiplicateur par une constante (M) est connectée à l'entrée du premier circuit de retard (V1), dont la sortie est couplée à la deuxième entrée du premier additionneur (A1), et à la première entrée du deuxième additionneur (A2), dont la sortie est celle du filtre numérique (D), et

la sortie du premier additionneur (A1) est connectée à l'entrée du deuxième circuit de retard (V2), dont la sortie est couplée à la deuxième entrée du deuxième additionneur (A2).

2. Circuit intégré selon la revendication 1, caractérisé en ce que le nombre a se situe entre — 2 et — 10.

3. Circuit intégré selon la revendication 1 ou 2, caractérisé en ce que additionneurs (A1, A2), multiplicateur par une constante (M) et circuits de retard (V1, V2) opèrent en parallèle sur des données à plusieurs chiffres.

5

FIG. 1

FIG. 2

FIG. 3

FIG.4

FIG.5